# EUROPEAN PATENT SPECIFICATION

(11) **EP 0 311 278 B1**
(45) Date of publication and mention of the grant of the patent: **23.11.1994**
(21) Application number: 88308816.3
(22) Date of filing: 22.09.1988
(51) Int. Cl.: C08G 18/44, C08G 18/76

(54) **Process for preparation of a thermoplastic polyurethane resin**
Prozess zur Herstellung eines thermoplastischen Polyurethanharzes
Procédé de préparation d'une résine de polyuréthane thermoplastique

(30) Priority: 06.10.1987 JP 250652/87
(43) Date of publication of application: 12.04.1989
(73) Proprietor: NIPPON POLYURETHANE INDUSTRY CO. LTD., Minato-ku Tokyo (JP)
(72) Inventor: Ohbuchi, Yukio, Yokohama-shi Kanagawa-ken (JP); Maeda, Yoshiaki, Yokohama-shi Kanagawa-ken (JP); Kawasaki, Masahiro, Yokohama-shi Kanagawa-ken (JP); Sato, Susumu, Yokohama-shi Kanagawa-ken (JP); Akimoto, Mamoru, Yokohama-shi Kanagawa-ken (JP)
(74) Representative: West, Alan Harry

(56) References cited:
- EP-A- 0 122 567
- FR-A- 1 540 799
- GB-A- 2 118 955
- US-A- 4 349 657

## Description

This invention relates to thermoplastic polyurethane resins and more particularly to thermoplastic polyurethane resins having improved hydrolysis resistance, heat deterioration resistance, temperature dependency and compression set.

Thermoplastic polyurethane resins have excellent physical properties such as high tensile strength, high fatigue resistance and good low temperature flexibility and also good abrasion resistance and therefore have excellent characteristics as compared with other thermoplastic resins.

Further, thermoplastic polyurethane resins are suitable for the production of articles of small size such as precision parts including packing, sound-damping gears, bearings, joints, parts for precision machines, automotive parts and electronic instrument parts. Also, they can be molded into belts, hoses, tubes, sheets and films by extrusion.

However, when compared with cast molded elastomers among urethane rubbers, thermoplastic polyurethane resins are inferior in compression set and, particularly when employed as a packing material deformation increases resulting in inferior sealing characteristics. Liquid and air leaks may then cause a problem. Also, temperature dependency has the drawback that hardness changes are liable to occur.

The temperature limit at which general thermoplastic polyurethane resins of the diphenylmethane diisocyanate (hereinafter MDI) type can be used is about 100°C. For this reason, it has long been desired to improve the heat resistance of tubes, coatings and packings of such resins to enable them to be used around the engines of automobiles under high temperature conditions.

However, such polyurethane resins perform well as compared with other thermoplastic resins (for example, polyvinyl chloride, polyester and polystyrene type resins) in terms of oil resistance and abrasion resistance, and therefore when used as automobile parts, materials exhibiting little hardness change even at elevated temperatures have been desired. Among the thermoplastic resins which can be used under relatively higher temperatures are polyester elastomers but they are inferior in terms of compression set and abrasion resistance as compared with thermoplastic polyurethane resins.

On the other hand, thermoplastic polyurethane resins (hereinafter TPU), are known to have improved hydrolysis resistance and heat resistance when made using a polycarbonate polyol, but most of these TPU use MDI as a diisocyanate component, and these MDI based polycarbonate type TPU have various drawbacks such as inferior low temperature characteristics, high temperature dependency of hardness, inferior compression set and poor impact resilience, and there has been much demand to improve such drawbacks.

The present invention seeks to overcome the drawbacks which could not be solved by the techniques of the prior art as mentioned above, namely heat aging resistance, temperature dependency of hardness, compression set and low temperature characteristic, and is based on the observation that such properties can be improved by use of a specific polycarbonate polyol and a specific diisocyanate as the components constituting the thermoplastic polyurethane resin.

FR-A-1 540 799 discloses a process for the preparation of polyurethanes wherein the polycarbonate polyol reactant is derived from diarylcarbonate.

According to the present invention, there is provided a process for obtaining a thermoplastic polyurethane resin which comprises the steps of:
(i) reacting 1,6-hexaneglycol with diethylcarbonate or ethylenecarbonate to form a hydroxyl-terminated poly(hexamethylene carbonate) polyol having a molecular weight of 850 to 5000; and
(ii) reacting together (A) p-phenylene diisocyanate (B) the hydroxyl-terminated poly(hexamethylene carbonate) polyol and (C) a short chain polyol having 2 to 10 carbon atoms as the chain extending agent in a molar ratio of (B) : (C) of 1 : 2 to 1 : 0.05 and a molar ratio of isocyanate groups : total active hydrogen of 0.93 : 1 to 1.20 : 1, to obtain a thermoplastic polyurethane resin product.

The poly(hexamethylene carbonate) polyol which is prepared in the first step of the process of the invention has a molecular weight of 850 to 5000, preferably 1000 to 3000. The polyol is obtained by condensation of 1,6-hexaneglycol with diethyl carbonate or ethylene carbonate, and has terminal hydroxyl groups.

The poly(hexamethylene carbonate) polyol can be used in combination with poly(butylene adipate) polyol, polycaprolactone polyol or poly(hexamethylene adipate)polyol, for example. Polycarbonate polyols other than poly(hexamethylene carbonate) polyol such as a polycarbonate polyol derived from 1.5-pentane diol, 3-methyl-1.5-pentane diol or cyclohexanedimethanol can be used alone or in combination with poly(hexamethylene carbonate) polyol. However, performance then tends to be slightly lowered than the case when poly(hexamethylene carbonate) polyol is used alone.

The organic diisocyanate to be reacted with these poly(hexamethylene carbonate) polyols is p-phenylene diisocyanate (hereinafter called PPDI). This PPDI is very intractable, because it is a diisocyanate having an extremely high melting point of 95°C and yet excessive sublimatability, which is also liable to convert into dimer in the molten state.

As the chain-extending agent to be used in the present invention, short chain polyols having 2 to 10 carbon atoms are used. For example, there may be included ethylene glycol, 1,3-propylene glycol, 1,4-butanediol, neopentyl glycol, 3-methyl-1,5-pentanediol, p-xylene glycol, 1,4-bis-(β-hydroxyethoxy)benzene, 1,3-bis-(β-hydroxyethoxy)benzene, cyclohexane 1,4-dimethanol, octane-1,8-diol or decane-1,10-diol, and these can be either alone or as a mixture of two or more. Particularly preferred chain extending agents are 1,4-butanediol and 1,4-bis-(β-hydroxyethoxy)benzene.

For introducing slight crosslinkage into the resin according to the present invention, triols such as TMP, glycerine and hexane-1,2,6-triol can be included in the diol, if necessary.

The isocyanate group and the active hydrogen as determined by the Zerewitinoff method, must maintain the stoichiometric ratio, and the molar ratio of isocyanate groups to active hydrogen should be 0.93 : 1 to 1.20 : 1, preferably 0.98 : 1 to 1.10 : 1.

Also, by maintaining the molar ratio of poly(hexamethylene carbonate)polyol to the chain-extending agent used in the present invention at 1 : 2 to 1 : 0.05, preferably 1 : 1 to 1 : 0.1, excellent physical properties can be obtained. By varying the ratio of poly(hexamethylene carbonate) polyol to chain-extending agent, the molecular weight of the poly(hexamethylene carbonate) polyol and the kind of chain-extending agent, a thermoplastic polyurethane resin having any desired hardness can be obtained.

The thermoplastic polyurethane resin according to the present invention can be mixed with additives such as antioxidants, lubricants, stabilizers, pigments, flame retardants and weathering resistance improving agents, if necessary, at a suitable stage of the preparation.

Particularly, in the preparation by use of a poly(hexamethylene carbonate) polyol having a large molecular weight or when the ratio of the chain extending agent is small, a tertiary organic amine catalyst or organic tin catalyst, can be used. Typical tertiary organic amine catalysts may include triethylamine, triethylenediamine, N,N,N',N'-tetramethylethylenediamine and N-methylmorpholine, and analogues thereof. Typical organic tin catalysts may include stannous octoate, stannous oleate, dibutyltin dilaurate, dibutyltin octoate and analogues thereof.

The method for preparing the thermoplastic polyurethane resin according to the present invention may be classified into two methods, the one shot method and the prepolymer method. In practising the present invention, the resin obtained according to the one shot method exhibits such tendencies that crystallinity is strong, that the melting characteristics during heat molding are inferior and yet that it is liable to become a brittle resin.

Accordingly, the thermoplastic polyurethane resin according to the present invention is preferably made according to the prepolymer method. When the preparation is carried out according to the prepolymer method, the desired thermoplastic polyurethane resin can be prepared by either the batch system or the continuous system. Also, since PPDI has a very high melting point, it is susceptible to denaturation in the molten state and further, PPDI has the property of being very readily sublimated in the molten state. Since the amounts of the starting materials to be used are required to be controlled accurately in the preparation according to the present invention, use of PPDI in the molten state will cause problems in maintaining the correct stoichiometric amounts of the isocyanate component and the active hydrogen component. Therefore, in obtaining the thermoplastic polyurethane resin of the present invention, for avoiding the above problem, PPDI should be preferably used in form of flakes.

In the batch system, when a prepolymer is synthesized from a poly(hexamethylene carbonate) polyol and PPDI and the resulting prepolymer is allowed to react with the chain-extending agent or the chain-extending agent and an additional amount of the poly(hexamethylene carbonate) polyol, since the viscosity of the prepolymer is extremely high, it is suitable to perform the preparation using a two-arm type kneader having strong stirring force. As the preparation method, that described in Japanese Patent Publication No. 56-43245 is useful.

Preparations of prepolymers in the present invention can be effected, in either a reaction vessel or a pressure kneader, at a reaction temperature of 65°C to 95°C for a reaction time of 15 minutes to 30 minutes. In this case, if the molar ratio of the isocyanate groups : active hydrogen rises above 2 : 1 to make isocyanate groups in excess, PPDI will sublime at a temperature of 90°C or higher, so that the ratio of isocyanate to active hydrogen is altered and no product having excellent physical properties can be obtained. Therefore, in such case, it is necessary to maintain the prepolymer temperature at 80°C or lower.

Also, in the preparation of the polyurethane resin according to the prepolymer system, the reaction of PPDI and poly(hexamethylene carbonate) polyol can be carried out using a two-arm type kneader to prepare the prepolymer, and subsequently the prepolymer can be reacted with a chain-extending agent or a chain-extending agent and an additional amount of poly (hexamethylene carbonate).

In the continuous system, the prepolymer has a high viscosity and is therefore poured onto a belt conveyor continuously through a high viscosity gear pump or a snake pump and the chain extending agent through a low viscosity gear pump continuously while being mixed by a mixing head. The mixture on the belt conveyor is heated continuously in a hot air drying furnace at 140°C to 170°C, whereby the reaction proceeds. The resulting belt-shaped solid product is then flaked in a pulverizer. After sufficient curing by heating, the product can be granulated through an extruder into strand pellets or granular pellets to give the desired thermoplastic polyurethane resin.

The above method is the continuous process in which polymerization is carried out under stationary state conditions; there is also the so-called continuous stationary polymerization described in Japanese Patent Publication No. 43-5920.

Other than the above methods, it is also possible to perform continuous polymerization according to the prepolymer method by means of a multi-axial extruder. Multi-axial extruder methods include those of Japanese Patent Publications Nos. 44-25600 and 56-5244, and either method may be applicable. Also, as a special example, preparation by means of a planetary roller extruder is also possible. Preparation is also possible using a co-kneader as described in Japanese Patent Publication No. 49-31760.

The product of the invention has specific features described below which could not be achieved by the thermoplastic polyurethane resin of the prior art, and is very useful as parts for industrial and automotive uses.
1. It has excellent heat aging resistance, and can be used even under elevated temperatures up to 150°C.
2. It has extremely good permanent compression set as compared with the thermoplastic elastomer of the prior art.
3. It has extremely low hardness temperature dependency as compared with the elastomer of the prior art.
4. It has extremely good resistance to hot water.
5. It has good abrasion resistance.
6. It has good workability for injection molding and extrusion molding.

From the specific features described above, the resin according to the present invention can be molded with good productivity by injection molding into industrial parts to be used at elevated temperatures (packing, O-rings), automotive parts (dampers, bushes, boots) and others.

Belts and tubes produced by extrusion molding can withstand use at elevated temperatures.

Further, the resin according to the present invention can be used to produce Spandex having good thermal stability and good steam resistance by melt spinning.

### EXAMPLES

The present invention is described below in more detail by the following Examples and Comparative Examples. Unless otherwise noted, "parts" and "%" are "parts by weight" and "% by weight", respectively.

### Example 1

The reaction was carried out between 2010 g of a desiccated poly(hexamethylene carbonate) polyol having terminal hydroxyl groups and a molecular weight of 2010 obtained by the condensation reaction of 1,6-hexaneglycol and diethyl carbonate, and 336 g of PPDI while stirring in a vessel equipped with a stirrer while maintaining the liquid temperature at 80°C for 20 minutes to prepare a prepolymer containing NCO groups.

The prepolymer (2900 g) was charged into a 3-litre pressure kneader (equipped with a pressurising device), and stirring was effected while maintaining the temperature of the prepolymer at 90°C, and 111 g of desiccated 1,4-butanediol was added. As the reaction progressed, the temperature rose due to the heat of reaction and the viscosity abruptly increased. The resin formed gradually solidified and bulked up. At that stage, cooling water was passed through the jacket of the kneader, and the pressurizing lid was gradually forced down to effect pressurization. The reaction product was gradually pulverized finely, and a polyurethane resin in fine powder form was obtained 30 minutes after initiation of the reaction. The resin obtained was further cured by heating at 105°C for 16 hours. The powdery resin formed could also be worked as such by extrusion molding or injection molding, but granulation was performed by extrusion molding to give pellets having good shapes. The pellets obtained were injection molded with extremely good moldability. Test strips (sheets of 112 x 112 x 2 mm) were prepared by injection molding, and physical properties were tested to obtain the results shown in Table 1. Also, the pellets could be molded into belts, sheets and tubes, by extrusion molding. These products were free from fish eyes, and had good surface characteristics.

### Example 2

Into a 3-litre pressure kneader was charged 2500 g of the poly(hexamethylene carbonate) polyol used in Example 1, and 418 g of PPDI flakes were charged while stirring at 80°C. With the progress of the reaction, PPDI was completely dissolved, and the reaction mixture increased in viscosity. When the NCO content was measured after the reaction for 20 minutes, the NCO content was found to be in substantial agreement with the theoretical NCO content of 3.9%.

Subsequently, with continued stirring, at the point when the temperature of the prepolymer became 90°C, 112 g of 1,4-butanediol were added to carry out the chain-extending reaction. With the progress of the reaction, the temperature rose due to the heat of reaction, and the viscosity abruptly increased. The resin formed gradually solidified. Subsequent treatment was the same as that described in Example 1. Granulation was effected by the extrusion molding, and pellets having good shapes could be obtained.

The pellets obtained had excellent moldability similar to that described in Example 1. The results of measurements of physical properties of the test strips obtained by injection molding in the manner described in Example 1 are shown in Table 1. The resin also had very good extrusion moldability.

### Example 3

The prepolymer obtained according to the method described in Example 1 was delivered through a high viscosity gear pump at 1667 g/min, and 1,4-butanediol was delivered through a low viscosity gear pump at 63.8 g/min, both to a mixing head. The reaction components were mixed continuously in the mixing head and poured onto a belt conveyor, and the reaction mixture was continuously heated in a hot air drying furnace at 160°C, in which resin formation proceeded. The belt-shaped solid product obtained was flaked in a pulverizer. Further, the flaked resin was post-cured at 105°C for 16 hours, followed by granulation by extrusion molding to give pellets having good shapes.

The pellets obtained had good injection moldability similar to that described in Example 1. The results of measurement of the physical properties of the test strips obtained by extrusion molding are shown in Table 1. The resin also had good extrusion moldability.

### Comparative Example 1

The reaction was carried out in the device described in Example 1 between 2010 g of the same desiccated poly(hexamethylene carbonate) polyol used in Example 1 and 1030 g of MDI to prepare a pseudoprepolymer having NCO groups. The psuedoprepolymer (2500 g) was charged into a 3-litre pressure kneader, and stirred while the temperature of the prepolymer was kept at 90°C, and desiccated 1,4-butanediol was added to carry out the reaction. The product was pelletized according to the steps described in Example 1, and test strips were obtained according to the method described in Example 1. The results of testing of the physical properties are shown in Table 1.

### Comparative Example 2

The reaction was carried out in the device described in Example 1 between 2010 g of the same desiccated poly(hexamethylene carbonate) polyol used in Example 1 and 776 g of toluidine-diisocyanate to prepare a pseudoprepolymer having NCO groups. The pseudoprepolymer (2900 g) was charged into a 3-litre pressure kneader, and stirred while the temperature of the prepolymer was kept at 110°C, and 168 g of desiccated 1,4-butanediol was added to carry out the reaction. The product was pelletized according to the steps described in Example 1, and test strips were obtained according to the method described in Example 1. The results of testing of the physical properties are shown in Table 1.

### Comparative Example 3

The reaction was carried out in the device described in Example 1 between 2000 g of a desiccated polycaprolactone polyol having an average molecular weight of 2000 and 336 g of PPDI to prepare a prepolymer having NCO groups. The prepolymer (2900 g) was charged into a 3-litre pressure kneader, and stirred while the temperature of the prepolymer was kept at 90°C, and 111 g of desiccated 1,4-butanediol was added to carry out the reaction. Pelletizing was conducted according to the steps described in Example 1 to obtain test strips. The results of testing of physical properties are shown in Table 1.

### Comparative Example 4

The reaction was carried out in the device described in Example 1 between 2000 g of a desiccated polycaprolactone polyol having an average molecular weight of 2000 and 1181 g of MDI to prepare a pseudoprepolymer having an NCO content of 9.8%. The pseudoprepolymer (3000 g) was charged into a 3-litre pressure kneader, and stirred while the temperature of the prepolymer was kept at 90°C and 297 g of desiccated 1,4-butanediol was added to carry out the reaction. Pelletizing was conducted according to the steps described in Example 1 to obtain test strips. The results of testing of physical properties are shown in Table 1.

### Example 4

By use of the device and method described in Example 2, 2500 g of a 1,6-hexanepolycarbonate polyol having a molecular weight of 2010 and 418 g of PPDI were charged to obtain a prepolymer having NCO groups. Subsequently, when the temperature of the prepolymer became 95°C, 246 g of 1,4-bis-(β-hydroxyethoxy)benzene was added to carry out the chain extending reaction. Following subsequently the preparation steps described in Example 1, pelletizing was effected to obtain test strips. The results of testing of the physical properties are shown in Table 1.

### Example 5

Into a 3-litre pressure kneader were charged 2250 g of desiccated poly(hexamethylene carbonate) polyol having a molecular weight of 3000, and 252 g of PPDI while stirring as described in Example 2, to obtain a prepolymer having NCO groups (the theoretical NCO content = 2.8%). When the temperature of the prepolymer became 85°C, 750 g of poly(hexamethylene carbonate) polyol having a molecular weight of 3000 and 99 g of 1,4-bis(β-hydroxyethoxy) benzene were added to carry out the chain extending reaction. Following the preparation steps described in Example 1, pelletizing was effected to obtain test strips. The results of testing of the physical properties are shown in Table 1.

### Example 6

Into a 3-litre pressure kneader were charged 2020 g of desiccated poly(hexamethylene carbonate) polyol having a molecular weight of 1010, and 672 g of PPDI flakes and reacted at 80°C for about 20 minutes to obtain a pseudoprepolymer having NCO groups (the theoretical NCO content = 6.9%). Next, when the temperature of the prepolymer became 80°C, 180 g of 1,4-butanediol was added to carry out the chain extending reaction. Following the preparation steps described in Example 1, pelletizing was effected to obtain test strips. The results of testing of the physical properties are shown in Table 1.

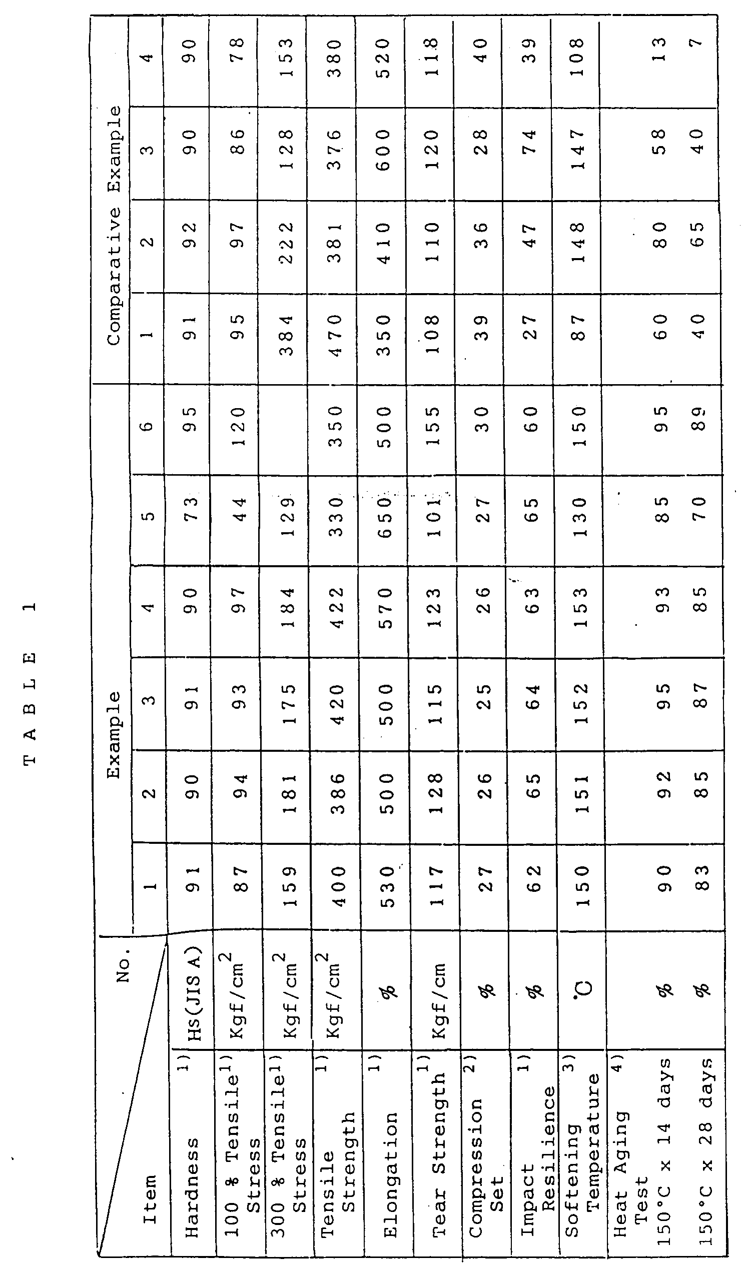

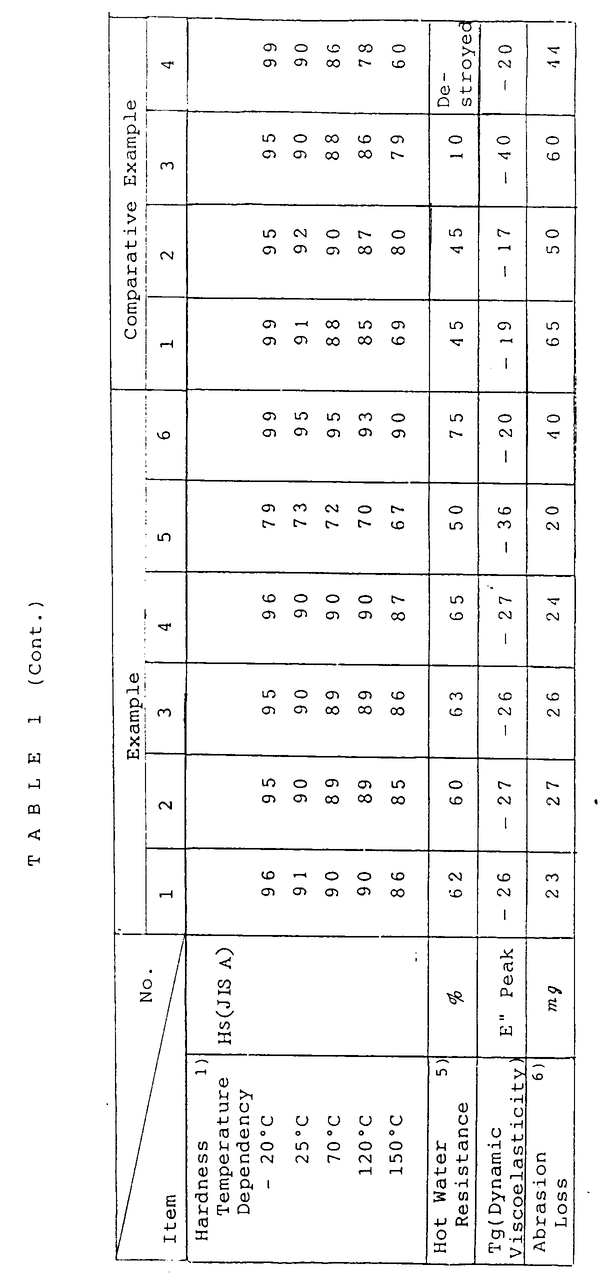

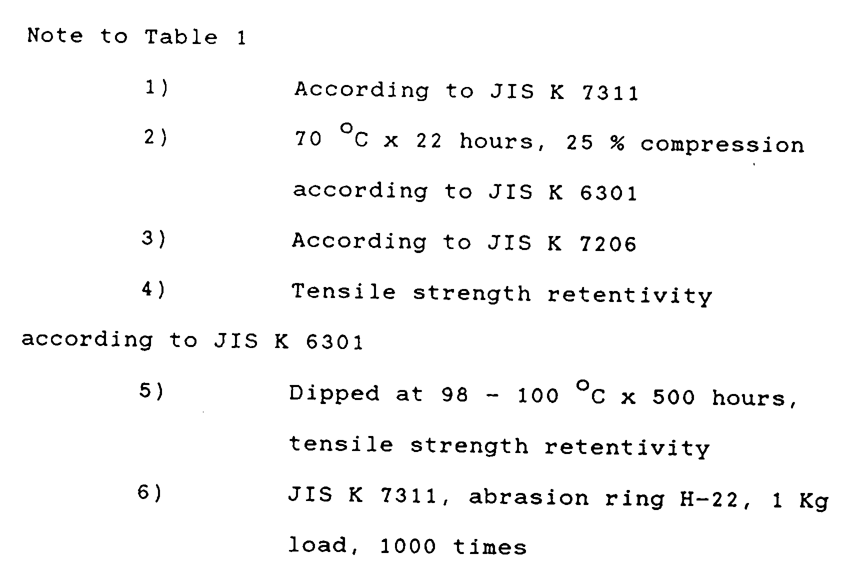

## Claims

1. A process for obtaining a thermoplastic polyurethane resin which comprises the steps of:
(i) reacting 1,6-hexaneglycol with diethylcarbonate or ethylenecarbonate to form a hydroxyl-terminated poly(hexamethylene carbonate) polyol (B) having a molecular weight of 850 to 5000; and
(ii) reacting together (A) p-phenylene diisocyanate, (B) said hydroxyl-terminated poly(hexamethylene carbonate) polyol and (C) a short chain polyol having 2 to 10 carbon atoms as the chain extending agent in a molar ratio of (B) : (C) of 1 : 2 to 1 : 0.05 and a molar ratio of isocyanate groups : total active hydrogen of 0.93 : 1 to 1.20 : 1, to obtain a thermoplastic polyurethane resin product.

2. A process according to claim 1, wherein the molar ratio of (B) : (C) is 1 : 1 to 1 : 0.1.

3. A process according to claim 1 or claim 2, wherein the molar ratio of isocyanate groups : total active hydrogen is 0.98 : 1 to 1.10 : 1.

## Patentansprüche

1. Verfahren zur Herstellung eines thermoplastischen Polyurethan-Harzes, das folgende Schritte umfasst:
(i) Reaktion von 1,6-Hexanglykol mit Diethylcarbonat oder Ethylencarbonat unter Bildung eines Poly-(hexamethylencarbonat)-polyols (B) mit endständigen Hydroxyl-Gruppen und einem Molekulargewicht von 850 bis 5000; und
(ii) Reaktion von (A), p-Phenylendiisocyanat, zusammen mit (B), dem Poly-(hexamethylencarbonat)-polyol mit endständigen Hydroxyl-Gruppen, und (C), einem kurzkettigen Polyol mit 2 bis 10 Kohlenstoff-Atomen, als Agens zur Kettenverlängerung, in einem molaren Verhältnis von (B) : (C) von 1 : 2 bis 1 : 0,05, und einem molaren Verhältnis der Isocyanat-Gruppen : Gesamtzahl der aktiven Wasserstoff-Atome von 0,93 : 1 bis 1,20 : 1, um ein thermoplastisches Polyurethan-Harzprodukt zu erhalten.

2. Verfahren nach Anspruch 1, worin das molare Verhältnis von (B) : (C) 1 : 1 bis 1 : 0,1 beträgt.

3. Verfahren nach Anspruch 1 oder Anspruch 2, worin das molare Verhältnis der Isocyanat-Gruppen : Gesamtzahl der aktiven Wasserstoff-Atome 0,98 : 1 bis 1,10 : 1 beträgt.

## Revendications

1. Procédé d'obtention d'une résine de polyuréthanne thermoplastique, qui comprend les étapes :
(i) de réaction de 1,6-hexaneglycol avec le carbonate de diéthyle ou le carbonate d'éthylène pour former un poly(carbonate d'hexaméthylène)-polyol à terminaison hydroxyle (B) ayant un poids moléculaire de 850 à 5000 ; et
(ii) de réaction mutuelle (A) de diisocyanate de p-phénylène, (B) dudit poly(carbonate d'hexaméthylène)-polyol à terminaison hydroxyle, et (C) d'un polyol à chaîne courte ayant 2 à 10 atomes de carbone comme agent d'allongement de chaîne en un rapport molaire (B) : (C) de 1:2 à 1:0,05 et un rapport molaire groupes isocyanate : hydrogène actif total de 0,93:1 à 1,20:1, pour obtenir comme produit une résine de polyuréthanne thermoplastique.

2. Procédé suivant la revendication 1, dans lequel le rapport molaire (B) : (C) est compris dans l'intervalle de 1:1 à 1:0,1.

3. Procédé suivant la revendication 1 ou la revendication 2, dans lequel le rapport molaire groupes isocyanate : hydrogène actif total est compris dans l'intervalle de 0,98:1 à 1,10:1.
